# EUROPEAN PATENT SPECIFICATION

(11) **EP 4 465 142 B1**
(45) Date of publication and mention of the grant of the patent: **30.07.2025**
(21) Application number: 23173944.2
(22) Date of filing: 17.05.2023
(51) Int. Cl.: G05D 1/693, G05D 105/28, G05D 109/10, G08G 1/01

(54) **PREVENTIVE DEADLOCK CLASSIFIER**
PRÄVENTIVVERKLEMMUNGSKLASSIFIKATOR
CLASSIFICATEUR À BLOCAGE PRÉVENTIF

(43) Date of publication of application: 20.11.2024
(73) Proprietor: Volvo Autonomous Solutions AB, 405 08 Göteborg (SE)
(72) Inventor: ROGENFELT, Åsa, 414 78 Gothenburg (SE); HELLGREN, Jonas, 412 58 Göteborg (SE)
(74) Representative: Zacco Sweden AB

(56) References cited:
- SVESTKA P ET AL: "Coordinated path planning for multiple robots", ROBOTICS AND AUTONOMOUS SYSTEMS, ELSEVIER BV, AMSTERDAM, NL, vol. 23, no. 3, 2 April 1998 (1998-04-02), pages 125 - 152, XP004122375, ISSN: 0921-8890, DOI: 10.1016/S0921-8890(97)00033-X
- DRAGANJAC IVICA ET AL: "Highly-scalable traffic management of autonomous industrial transportation systems", ROBOTICS AND COMPUTER INTEGRATED MANUFACTURING, ELSEVIER SCIENCE PUBLISHERS BV., BARKING, GB, vol. 63, 13 December 2019 (2019-12-13), XP086019179, ISSN: 0736-5845, [retrieved on 20191213], DOI: 10.1016/J.RCIM.2019.101915

## Description

### TECHNICAL FIELD

The disclosure relates generally to design of sites where vehicles move in planned trajectories. In particular aspects, the disclosure relates to a preventive deadlock classifier.

The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A traffic deadlock refers to a situation where vehicles or other modes of transportation are unable to move due to a network of roads or pathways becoming blocked or congested in a way that prevents any of them from moving forward. One example is when two vehicles meet in a narrow tunnel, where only one vehicle at a time can drive. As both vehicles wants access to the location of the other vehicle, the vehicles become stuck in a deadlock with only reversing out of the tunnel being possible.. It is particularly a problem when planning trajectories for a plurality of heavy-duty vehicles as these vehicles can be more constrained than other types of vehicles in terms of how they move along a trajectory. When planning trajectories for a plurality of vehicles forming a vehicle fleet operating within a particular area or site, it is accordingly important to try to minimise the risk of deadlocks occurring as each vehicle will follow its planned trajectory even if this crosses a planned trajectory of another vehicle or passes through a traffic-constrained location where one or more other planned vehicle trajectories may pass.

Planning trajectories for autonomous or semi-autonomous heavy-duty vehicles operating in the same area can be particularly challenging as such vehicles may have a range of roles and operational tasks that use a motion support devices (MSDs) for their operation. MDSs may take the form of wide range of different physical devices, such as combustion engines, electric machines, friction brakes, regenerative brakes, shock absorbers, air bellows, and power steering pumps which may be individually controllable, for instance such that friction brakes may be applied at one wheel, i.e., a negative torque, while another wheel on the vehicle, perhaps even on the same wheel axle, is simultaneously used to generate a positive torque by means of an electric machine.

The operation of a heavy-duty vehicle is accordingly more complex than the operation of a more lightweight vehicle such as a car and extricating a plurality of heavy-duty vehicles from a deadlock situation may not be very straightforward, especially if the heavy-duty vehicle is operating autonomously. Even if a heavy-duty vehicle is semi-autonomously operated or manually driven or operated either from within the vehicle or remotely in some embodiments, if it encounters a deadlock along a guided trajectory it may require special skills and equipment as well as possibly reprogramming to be removed from the deadlock.

Reducing the likelihood of encountering a traffic deadlock is accordingly desirable when planning guided trajectories for a fleet of vehicles operating within the same area or site. Svestka P Et al: "Coordinated path planning for multiple robots", Robotics and autonomous systems, Elsevier BV, Amsterdam, NL, vol. 23, no. 3, 2 April 1998 (1998-04-02), pages 125-152, XP004122375,ISSN: 0921-8890, DOI: 10.1016/50921-8890(97)00033-X discloses a method for multi-robot path planning problem for car-like robots. Initially, a roadmap is constructed for one robot using a probabilistic path planner, that can be applied to different robot types. Second, a number of road maps are combined into a roadmap for the robot. This data-structure can be used for retrieving multi-robot paths.

The disclosed technology seeks to mitigate, obviate, alleviate, or eliminate various issues known in the art that affect the ability of a vehicle to follow a guided trajectory in an area where traffic situations may include at least one area where vehicle occupancy is limited more than it is elsewhere along the vehicle trajectories.

### SUMMARY

According to a first aspect of the invention, a computer-implemented method of assessing vehicle trajectories for deadlock scenarios in a site where multiple vehicles operate by following planned vehicle trajectories is claimed according to claim 1.

The first aspect of the invention may seek to provide a way to predict where deadlocks can happen at sites comprising at least one traffic-constrained area. A technical benefit may include that deadlocks can be avoided when designing and setting up such a site.

In some examples, including in at least one preferred example, optionally iteratively updating the states of the multiple vehicles comprises:
- selecting the other node positions for the multiple vehicles randomly or pseudo-randomly with each iteration. A technical benefit may include the possibility to test a number of scenarios that may otherwise may have been overlooked if the node positions are selected systematically. A further technical benefit may be that it simplifies automation of the assessment of the vehicle trajectories for deadlock scenarios.

In some examples, including in at least one preferred example, optionally iteratively updating the states of the multiple vehicles comprises:
- selecting the other node positions for the multiple vehicles to maximise their moved distance with each iteration. A technical benefit may include optimising the throughput of the site in order to maximise site productivity.

In some examples, including in at least one preferred example, optionally an explicit deadlock state fulfils the condition that a set of vehicles block each other from moving along their planned trajectories. A technical benefit may include that it is possible to easily recognise deadlock scenarios.

In some examples, including in at least one preferred example, optionally the vehicles are autonomous vehicles following planned trajectories.

In some examples, including in at least one preferred example, optionally the vehicles are manually operated vehicles following planned trajectories. The method is also applicable to a fleet of manually operated vehicles or a combination of the two. The manually operated vehicles can be remotely operated or driven by a driver.

In some examples, including in at least one preferred example, optionally the traffic-constrained area is a single traffic lane. Examples of such areas are gates, tunnels and similar areas that only a single vehicle can occupy.

In some examples, including in at least one preferred example, optionally the method comprises:
- identifying the nodes along the vehicle trajectories, where the vehicles have the greatest likelihood of encountering traffic deadlock situations. A technical benefit may include that it makes it possible to adapt a site during the planning stage such that these nodes can be moved or deleted to remove the deadlock situations.

In some examples, including in at least one preferred example, optionally the method comprises:
- Minimising the likelihood of deadlocks by adjusting one or more or all of: the number of vehicles; their vehicle trajectories; and one or more traffic constraint rules along the vehicle trajectories.

According to a second aspect of the invention, a computer-implemented traffic planner for planning a plurality of planned vehicle trajectories for vehicles within a site having at least one traffic-constrained location is claimed according to claim 9.

The claimed computer-implemented traffic planner may seek to provide a traffic planner that stores, in one or more memories, current (explicit) and future (implicit) deadlock states such that configuration of vehicle traffic at the site can be planned to avoid these states. A technical benefit may include configuring site traffic in advance of any vehicles being deployed. The planned vehicle trajectories by the traffic planner avoids problems such as vehicle jams, unnecessary delays or deadlocks.

In some examples, including in at least one preferred example, optionally the traffic planner is configured, based on the stored explicit and implicit deadlock states in the first and second classification memories, to determine if a planned design of a site where multiple vehicles will operate by following planned vehicle trajectories will cause implicit and/or explicit deadlocks. A technical benefit may include that the design of a site, before the site is constructed, can be seen to include deadlocks and can thereby be adapted to remove explicit and implicit deadlock states.

In some examples, including in at least one preferred example, optionally the traffic-constrained location within the site through which the plurality of planned vehicle trajectories pass, comprises a one-way section along which at least two vehicle trajectories pass in different directions.

In some examples, including in at least one preferred example, optionally the vehicles are autonomous or manually operated heavy-duty vehicles following predetermined planned vehicle trajectories in the site.

In some examples, including in at least one preferred example, optionally the site is a construction site, a mine, a harbour, a warehouse, an airport or a mass transit station.

According to a third aspect of the invention, as claimed in claim 12, a computer program product comprises program code for performing, when executed by the processing circuitry, the method of the first aspect of the disclosure.

According to a fourth aspect of the invention, as claimed in claim 13, a non-transitory computer-readable storage medium comprises instructions, which when executed by the processing circuitry, cause the processing circuitry to perform the method of the first aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognised by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** **is** an exemplary design of a site comprising a traffic-constrained location.
**FIG. 2** is an exemplary, simplified design of the site of figure 1, where vehicles within the site are in a deadlock state.
**FIG. 3** is an exemplary, simplified design of the site of figure 1, where vehicles within the site are not in a deadlock state.
**FIG. 4** shows a graph for the example site of figure 1, according to one example vehicle starting state for three vehicles.
**FIG. 5** shows a simplified graph according to figure 4, after explicit deadlocks have been identified.
**FIG. 6** shows the method according to the first aspect of the disclosure.
**FIG. 7** shows an example of an apparatus including computer program code configured when executed to cause the apparatus to implement an embodiment of the method shown schematically in FIG. 6.
**FIG. 8** is a schematic diagram of an exemplary computer system **800** for implementing examples disclosed herein.

### DETAILED DESCRIPTION

The detailed description set forth below provides information and examples of the disclosed technology with sufficient detail to enable those skilled in the art to practice the disclosure.

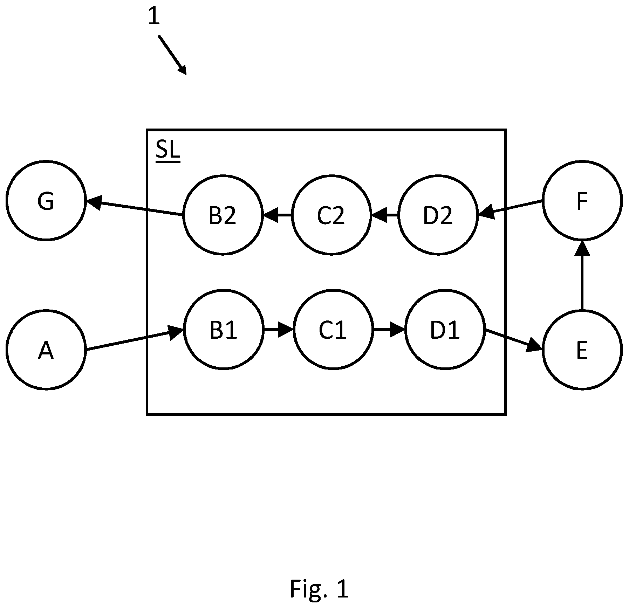

**FIG. 1** **is** an exemplary design of a site **1** comprising a traffic-constrained area **SL** (for single lane, i.e. an area allowing only traffic going one-way at a time) where a plurality of vehicles follow planned vehicle trajectories around the site **1.** In **FIG. 1****,** the vehicle trajectory is cyclical and comprises nodes (in order of travel) **A, B1, C1, D1, E , F, D2, C2, B2, G** of which nodes **B1, C1, D1, D2, C2** and **B2** pass through the traffic-constrained area **SL.** The arrows indicate the intended direction of travel along the vehicle trajectories. In order to maintain an efficient flow in the site **1,** each vehicle only travels in the direction of the arrow between the nodes and not in the opposite direction. The site **1** is thus modelled using a connected directed graph.

If the vehicle speeds are assumed to be constant along each vehicle trajectory, then the nodes will be located along each vehicle trajectory at equal time intervals or periods of time. If, however, a planned vehicle trajectory requires a vehicle to move more slowly along its trajectory within the site than other vehicles move along their trajectories, its nodes will be spaced closer together than the nodes along the other trajectories. Similarly, if a planned vehicle trajectory requires a vehicle to move more quickly along its trajectory path, then the nodes along that trajectory path will be spaced further apart as the vehicle will have moved more along its trajectory in that time period.

At a site where a number of vehicles will be guided autonomously or semi-autonomously along one or more planned trajectories, each vehicle's trajectory, meaning its direction along a path and speed of travel along that path, is ideally planned in advance using a traffic planner. The traffic planner, in other words, configures the site traffic in advance of any vehicles being deployed and guided along vehicle trajectories in a way that avoids any problems such as vehicle jams, unnecessary delays or deadlocks, where the trajectories planned result in a plurality of vehicles being unable to move because of the location they are in having certain traffic constraints on vehicle occupancy limits in that location. In the site **1,** this location is the traffic-constrained area **SL.**

In the traffic-constrained area **SL,** only one vehicle may drive through at a time. In practice, this means that if one of the nodes **B1, C1, D1, D2, C2** and **B2** is occupied, all nodes **B1, C1, D1, D2, C2** and **B2** are considered occupied for the sake of determining deadlock or not.

A traffic deadlock is a traffic "impasse" situation that may occur along or at the destination or start of a vehicle trajectory in a traffic-constrained area. A traffic-constrained area is an area where node occupancy is restricted. The occupancy restriction may be for a number of nodes that are on the same vehicle trajectory or for nodes on different vehicle trajectories.

Other examples of traffic-constrained areas include contraflow-type situations or any similar location along a trajectory where there is a narrowing in the road surface along a vehicle trajectory where vehicles have to pass each other in single file. A traffic-constrained area may also be created by a task that a vehicle has to perform at a particular location along its trajectory. For example, lack of access to an available loading bay or a refuelling point along a trajectory may also create a deadlock situation, if a vehicle occupying such a location cannot vacate the location because another vehicle is occupying the next available location along its trajectory.

A deadlock situation may occur when two or more nodes in a traffic-constrained area enter a cyclic state of occupancy such that a first node within the traffic-constrained location cannot be vacated until another node in the traffic-constrained location has been vacated, where the other node in the traffic-constrained location cannot be vacated until the first node has been vacated. A deadlock can accordingly occur where multiple vehicles are all following the same trajectory path but are occupying different nodes along that trajectory path or amongst multiple vehicles each following different trajectories/trajectory paths that enter a traffic-constrained area from different directions.

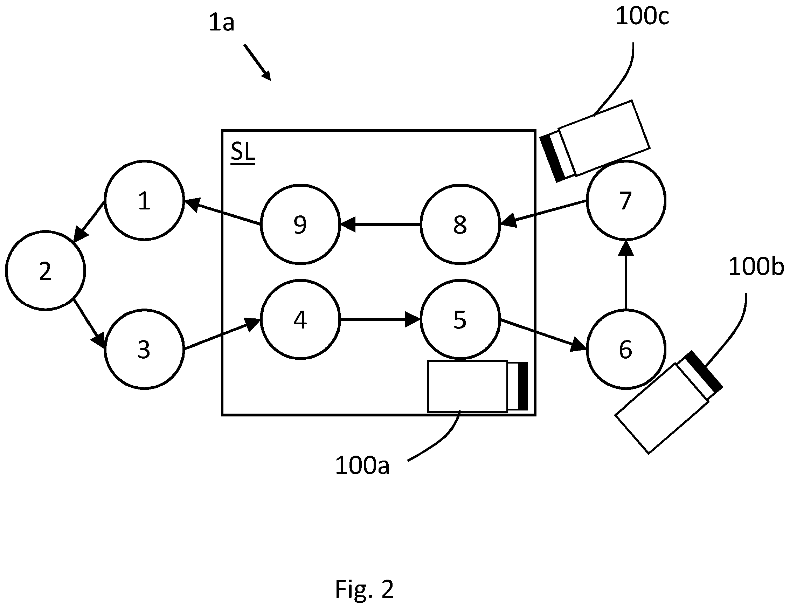

**FIG. 2** is an exemplary, simplified site **1a** of the site **1** of **FIG. 1****,** where a fleet of vehicles **100a, 100b, 100c** follow their planned trajectories around the site **1a.** The site **1a** comprises a cyclical vehicle trajectory comprising of nodes **1-9,** where a traffic-constrained area comprises nodes **4, 5, 8** and **9.** The vehicle trajectories include moving through nodes **1-9** in numerical order. Similar as for **FIG. 1****,** if a vehicle occupies one of the nodes **4, 5, 8** and **9,** none of the other nodes **4, 5, 8** and **9** are available to move to for another vehicle. **FIG. 2** shows how a traffic deadlock occurs as the plurality of vehicles **100a, 100b, 100c** move along the single vehicle trajectory that passes more than once through the traffic-constrained area **SL.** As shown in **FIG. 2****,** vehicle **100a** at node **5** cannot move in the next time period to node **6** as vehicle **100b** is occupying node **6** and cannot move as its next node would be **7** which is occupied by vehicle **100c** which cannot move into the traffic-constrained area **SL** node **8** due to vehicle **100a** occupying node **5** of the traffic-constrained area **SL** already.

The movement of the vehicles **100a-c** along their planned trajectories is in some embodiments fully autonomous, in other words, their speed, direction of travel, and the path of the vehicle trajectories are all determined by a traffic planner for the site. Nonetheless, in some embodiments, despite the traffic planner configuring vehicle trajectories to guide the vehicles along their trajectory paths, the vehicle may be manually controlled for some tasks and in some embodiments the vehicles may be guided semi-autonomously and/or remotely, for example, from a site server or back office server in a manner which allows them to follow a planned trajectory.

At a site where a number of vehicles will be guided autonomously or semi-autonomously along one or more planned trajectories, each vehicle's trajectory, meaning its direction along a path and speed of travel along that path, is ideally planned in advance using the traffic planner. The traffic planner in other words, configures the site traffic in advance of any vehicles being deployed and guided along vehicle trajectories in a way that avoids any problems such as vehicle jams, unnecessary delays or deadlocks, where the trajectories planned result in a plurality of vehicles being unable to move because of the location they are in having certain traffic constraints on vehicle occupancy limits in that location.

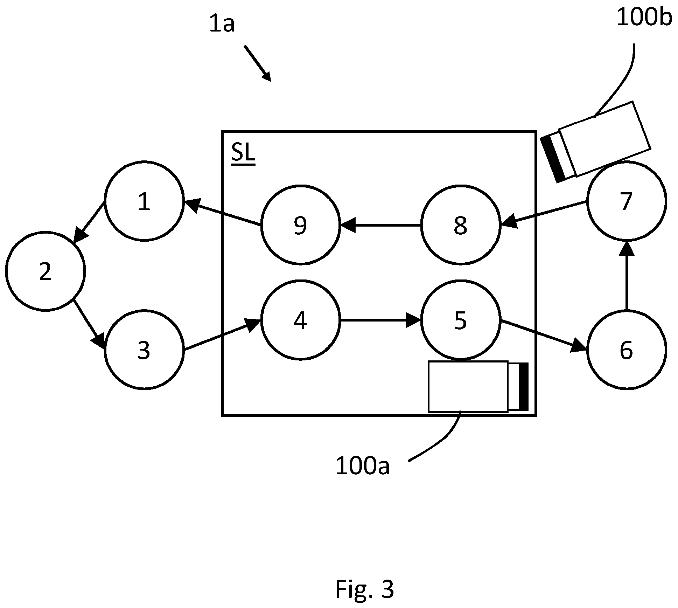

**FIG. 3** is an exemplary of the simplified site **1a** of the site **1** of **FIG. 1****,** where vehicles within the site **1a** are not in a deadlock state. **FIG. 3****,** in contrast to **FIG. 2****,** illustrates schematically how reducing the number of vehicles travelling along the trajectory shown in **FIG. 2** to just two vehicles, **100a** and **100b** separated by at least one node, could not result in a deadlock situation, as one vehicle will never block the other vehicle from entering the constrained area or leaving it when following the guided trajectory as shown when there is at least one nodes distance between them. The vehicle **100b** at node **7** can move to node **8** when the vehicle **100a** at node **5** moves to node **6.** In other words, by changing the number and/or spacing of vehicles following a guided trajectory a gridlock situation may be avoided. Spacing between vehicles following the same trajectory path can be achieved by changing their relative speeds between nodes and/or having one vehicle wait at a node, for example, by being modelled to occupy a node for a plurality of time intervals or periods. Further, minimising the likelihood of deadlocks can be made by adjusting the number of vehicles; their vehicle trajectories; and/or one or more traffic constraint rules along the vehicle trajectories. Traffic constraint rules can for instance be to make a planned single lane area of the trajectory into a two-lane area or to setup additional nodes that can be included in the planned trajectory to bypass the traffic-constrained area.

The node positions that each of the multiple vehicles occupy are randomly or pseudo-randomly selected with each iteration. This means that each vehicle randomly or pseudo-randomly either moves to a node further along the trajectory or waits at the node it is currently at. Alternatively, the node positions for the multiple vehicles are selected to maximise their moved distance for each time period.

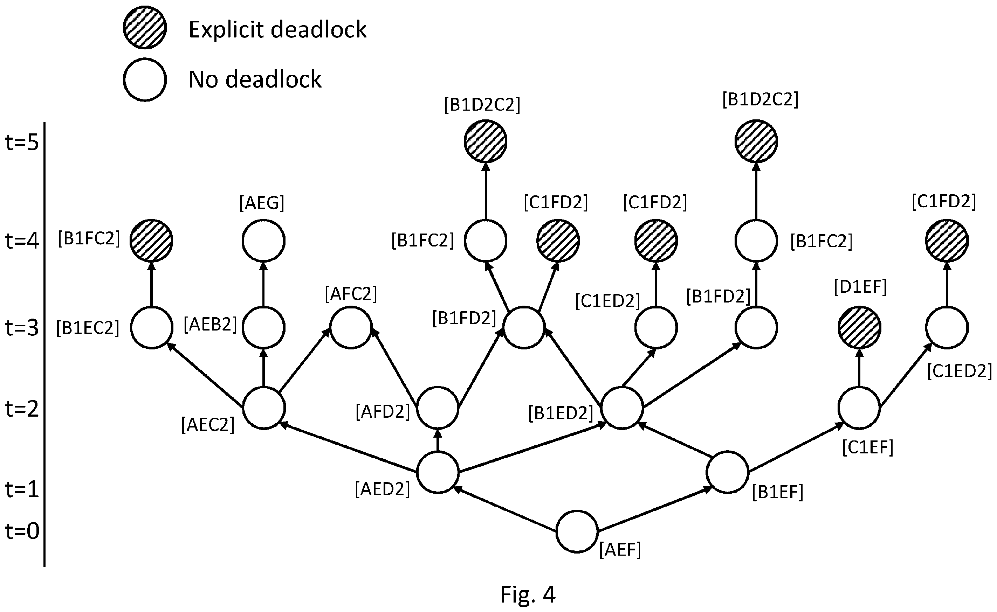

**FIG. 4** shows a deadlock graph or search tree for the example site of **FIG. 1****,** according to one example vehicle starting state for three vehicles. When designing and setting up site where vehicles will move along planned trajectories, it is desired to avoid deadlock in order to reduce downtime due to that vehicles need to be backed out of deadlocks or that vehicle will have to wait excessive amounts of time in certain places. Referring to **FIG. 1****,** if three vehicles are positioned in nodes **D1, E** and **F** there is a current deadlock situation, this is also called an explicit deadlock. None of the vehicles can move.

If the vehicles instead would be placed at nodes **A, F, G,** the three vehicles are not currently in a deadlock and can move, but any possible steps taken by any of the vehicles will lead to a future deadlock. Such a situation is called an implicit deadlock. (It is assumed that the vehicle in node **G** will either move to node **A** or be replaced by a new vehicle wanting to enter node **A.**)

Referring again to **FIG. 1****,** an example starting point for a calculation of implicit (or future) or explicit (or current) deadlocks, is set to be nodes **A, E** and **F.** This is indicated in the figure as the state **[AEF].** This state is set at time t=0.

At time t=1, one of the vehicles move to a node further along the trajectory and the state is evaluated for deadlock or no deadlock. A classifier informs the search tree of a state is an explicit deadlock or not. An example of such a deadlock classifier model can be found in the patent application EP22196693.0 from the same applicant. As can be seen, the states **[AED2]** and **[B1EF]** does not constitute an explicit deadlock.

At time t=2, one of the vehicles of each previous state move to a node further along the trajectory and the new state is evaluated for deadlock or no deadlock. Also at this stage, no one of the states **[AEC2], [AFD2], [B1ED2]** or **[C1EF]** constitutes a deadlock.

At time t=3, one of the vehicles of each previous state move to a node further along the trajectory and the new state is evaluated for deadlock or no deadlock. Here, the first explicit deadlock is encountered at state **[D1EF].** In these positions, none of the three vehicles can move since the vehicle in **D1** needs to move to **E,** which is occupied, the vehicle in **E** needs to move to **F,** which is occupied and the vehicle in **F** needs to move to **D2,** which is occupied as this is part of the traffic-constrained area comprising nodes **B1, C1, D1, D2, C2, B2.** From this state, the calculation stops. The remaining states **[B1EC2], [AEB2], [AFC2], [B1FD2]** or **[C1ED2]** does not constitute a deadlock. From these states, the calculation continues. Note that states occur at several branches of the graph as time progresses.

At time t=4, a further set of states constituting explicit deadlock has been identified: **[B1FC2],** and **[C1FD2].** One state, **[AEG],** where one of the vehicles has reached the end node **G** has been arrived at which does not constitute a deadlock.

At time t=5, the final state constituting explicit deadlock, **[B1D2C2]** has been reached and further calculations are stopped. For larger sites with more vehicles involve, additional time steps may be required in order to calculate all explicit deadlocks.

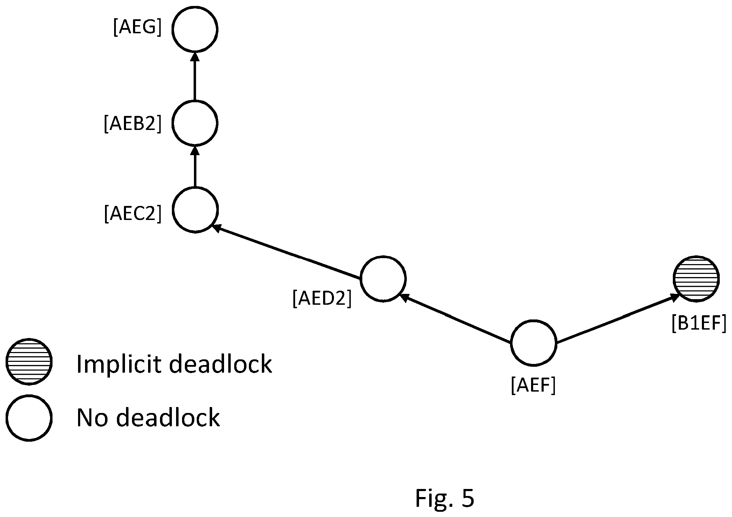

**FIG. 5** shows a simplified graph or search tree according to **FIG. 4****,** after all explicit deadlocks for the starting position **[AEF]** have been identified. After all explicit deadlocks have been identified as shown in **FIG. 4****,** the graph or search tree can be simplified or pruned to only contain the states that will not lead to a deadlock as well as the first state that will ultimately lead to explicit deadlocks, i.e. a state with implicit deadlock is shown, in this example the state **[C1EF].** Thus, moving the vehicle starting in node **A** to node **B** as the first step will ultimately lead to an explicit deadlock.

Once the calculations for all states with explicit deadlock have been made for all starting positions of the vehicles, as the example of figure shows, simplified graphs or search trees can be stored that will in very short time show the states that does not lead to deadlock. This simplification of complex calculations that are made offline will save a lot of time during planning of a worksite and can also be used in real-time to adapt a vehicle trajectory if needed.

By calculating which vehicle moves result in a trajectory that will cause them to end up in a deadlock using the calculations as shown above, vehicle trajectories can be more reliably identified offline, which when implemented reduce the likelihood of or completely avoid subsequent deadlocks. Advantageously, this allows the traffic planner to select actions to guide a set of vehicles along vehicle trajectories and/or to plan for a number of vehicles to follow the same trajectory whilst observing node occupancy constraints in a way that reduces reduce the likelihood of a deadlock occurring along any traffic-constrained areas long their trajectory/trajectories.

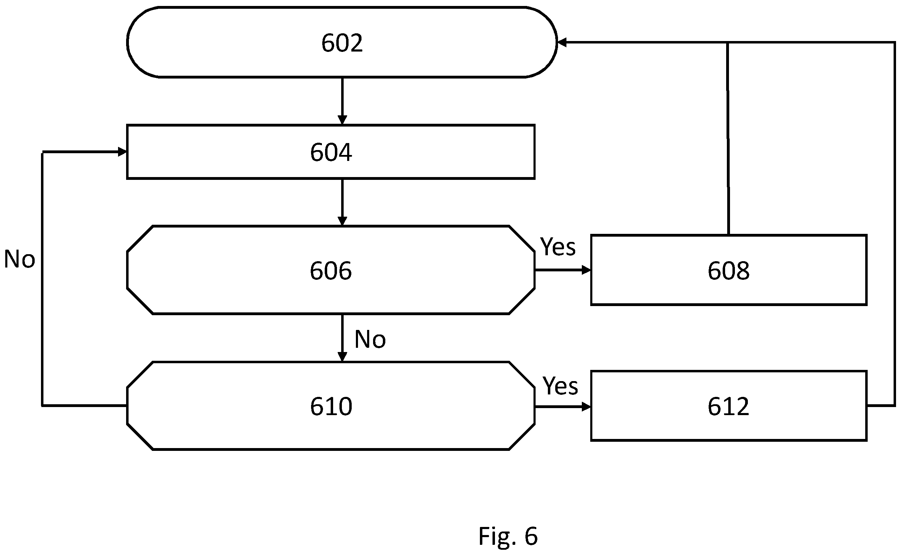

**FIG. 6** is a flowchart of an exemplary method **600** of assessing vehicle trajectories for deadlock scenarios in a site where multiple vehicles operate by following planned vehicle trajectories. The method **600** may comprise the following actions, steps or operations.

**Action 602.** The vehicles for which the calculation of deadlock states are to be made are placed at their respective start nodes. As described in conjunction with **FIG. 4** above, planning for three vehicles to move along the trajectory of the site of **FIG. 1****,** the starting nodes are nodes **A, E** and **F** respectively. **Action 604.** One or more of the vehicles are moved along their planned vehicle trajectory to a new state corresponding to positioning at least one vehicle at a node further along the trajectory. This corresponds to one of the states at time t=1 of **FIG. 4****. Action 606.** The new state, i.e. new vehicle positions, is checked to see if it constitutes an explicit deadlock or not. **Action 608.** If the new state is determined to constitute an explicit deadlock, the state is added to a first classification memory **M_1.** The vehicles are reset to new start locations for a new calculation. **Action 610.** If the state checked during **Action 606** is not deemed to be an explicit deadlock, the state is checked to see if it constitutes an implicit deadlock, i.e. a state that no matter how the vehicles move after moving to that state will lead only to future explicit deadlocks. If the new state is not deemed to constitute an implicit deadlock, one or more of the vehicles move again according to **Action 604.** This corresponds to a state at time t=2. **Action 612.** If the state is determined to constitute an implicit deadlock, the state is added to a second classification memory **M_2.** The vehicles are reset to new start locations for a new calculation.

Calculations according to the above are made until all explicit and implicit deadlocks are found for all starting positions. This builds up several graphs of **FIG. 4** that in turn can be simplified to graphs according to **FIG. 5****.**

The first and second classification memories, **M_1** and **M_2** may be different parts of the same memory or may be two separate memories that can be accessed by the computer-implemented traffic planner.

As an example, the table below presents an example applying the method of the disclosure to site **1** of **FIG. 1****:**

**Table 1. Example application of the method of the disclosure.**

| **Iteration** | **Found deadlock** | **Type** | **Number of items in M_1** | **Number of items in M_2** | **Comment** |
|---|---|---|---|---|---|
| 1 | E,F,D1 | Explicit | 1 | 0 | |
| 2 | E,F,C1 | Implicit | 1 | 1 | At this state vehicle at F is not allowed to move due to the single lane of the traffic-constrained area. The only possible move of the vehicle at C1 will result into the explicit deadlock found in iteration 1. |
| 3 | E,F,D1 | Implicit | 1 | 2 | Similar situation as above but the implicit deadlock found in iteration 2 blocks future movement of the vehicles. |

When the process is finished, the memories will contain states according to the table below:

| | |
|---|---|
| M_1: | E,F,D1 |
| M_2: | [E,F,C1], [E,F,B1] |

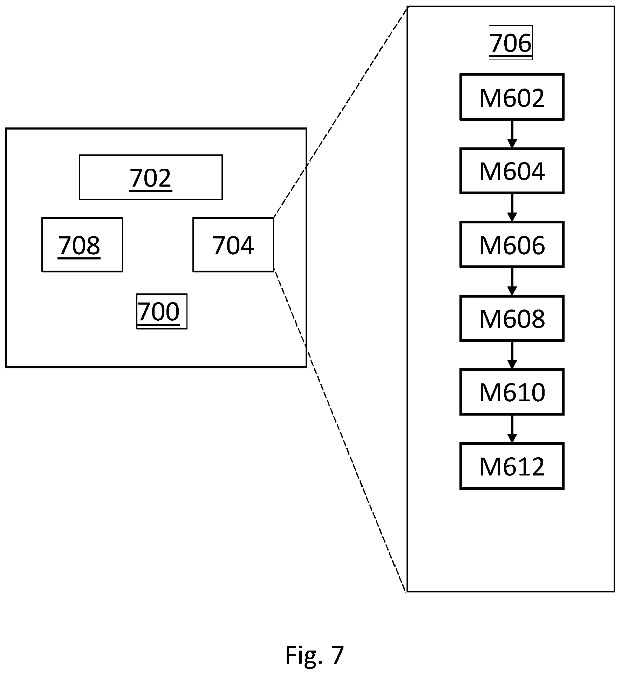

**FIG. 7** shows an example of a traffic planner **700** including computer program code configured when executed to cause the traffic planner to implement the method shown schematically in FIG. 6. The traffic planner **700** further comprises a memory **704,** computer code **706** and one or more processor(s) or processing circuitry **708.** The computer code, when loaded from memory **704** and executed by the one or more processors or processing circuitry **708,** causes the traffic planner **700** to perform the actions, steps or operations of the methods described above. Also, the memory **704** may comprise the first and second classification memories, **M_1** and **M_2.** Alternatively, the first and second classification memories, **M_1** and **M_2** may be one or two separate memories of the traffic planner **700.**

One or more data communication component(s) **702** may be provided for the traffic planner to enable communications with one or more remote entities. For example, in some embodiments a suitable receiver/transmitter/antenna arrangement is provided to communicate planned vehicle trajectories with one or more vehicles **100a-100c** which form a planned fleet of vehicles intended to operate at a particular site or which are operating at a particular site to update the vehicles' planned vehicle trajectories at the site or defined region. The one or more data communication component(s) **702** may also be used to provide an alert when a deadlock has been identified by the method **600.**

The memory **702** stores computer program code **706** which, when loaded from the memory and executed by the one or more processor(s) or processing circuitry configures the traffic planner **700** to perform the disclosed method **600** for example. For example, in the embodiment of the computer program code shown in **FIG. 7****,** the computer program code **706** comprises a set of computer code modules **M602-M612,** which correspond to steps **5602 to S612** shown in **FIG. 6****.**

The computer-implemented traffic planner is configured for planning a plurality of planned vehicle trajectories for vehicles within a site according the examples above having at least one traffic-constrained area according the examples above. The traffic planner comprises a deadlock classifier model configured to classify a traffic situation for vehicle traffic following planned vehicle trajectories within the site. An example of such a deadlock classifier model can be found in the patent application EP22196693.0 from the same applicant. The deadlock classifier comprises first classification memory and a second classification memory wherein the traffic planner is configured, based on classifications generated by the method according to figure 6, to populate the first classification memory with explicit deadlock states and the second classification memory with implicit deadlock states until all explicit and implicit deadlock states are found. The traffic planner is further configured, based on the stored explicit and implicit deadlock states in the first classification memory and the second classification memory, to plan an action to perform along each planned vehicle trajectory in the site. The action can for instance be to remain at the current node or to move forward to the next node.

The traffic planner may further be configured, based on the stored explicit and implicit deadlock states in the first and second classification memories, to determine if a planned design of a site where multiple vehicles will operate by following planned vehicle trajectories will cause implicit and/or explicit deadlocks. In this way, vehicle trajectories for the site can already during planning to a great extent be laid out such that the risk of encountering deadlocks are removed or at least greatly reduced. Should the site need to be adapted over time, such as for instance due to a new phase in construction or due to expansion of a site such as a mine, harbour or warehouse, the traffic flow can already be planned in order for traffic to flow smoothly as soon as the adaptation of the site is finished.

The traffic planner may be implemented on a stand-alone server or server system. The traffic planner is configured to assess a plurality of vehicle trajectories where a vehicle trajectory comprises a trajectory path, direction of travel, and action along the trajectory path in the direction of travel, for example, an action to pause at a particular segment of the trajectory, or to move to the next segment along the trajectory. A traffic planner for a site accordingly has the objective of planning how a plurality of vehicles should move or be guided along one or more trajectory paths in a site or similar defined area or region. Ideally, the guided vehicle trajectories at a site are planned in a way that avoids deadlocks occurring to maximise their individual or fleet efficiency. For example, vehicle trajectories that avoid deadlocks may allow vehicles at a site to function in a way that optimises their operational behaviour and fuel consumption, and ideally so that the site of operations as a whole is run efficiently.

The traffic planner can calculate for each vehicle a vehicle trajectory that avoids a deadlock occurring within the planning horizon. In this way, the traffic planner may configure a plurality of vehicle trajectories within a site or similarly defined area where there may be one or more traffic-constrained areas or locations. The traffic planner may optimize the efficiency of the vehicle movements within the site to improve vehicle-related operations. For example, congestion at loading or unloading locations or at fueling sites can be avoided.

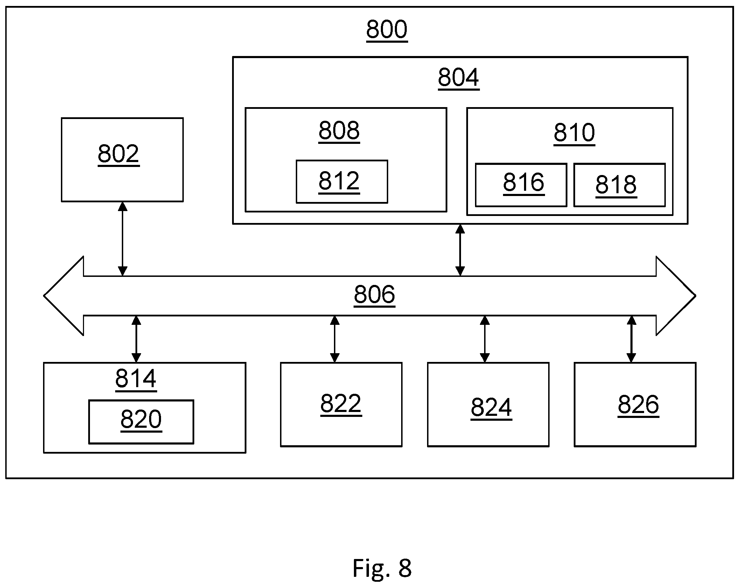

**FIG. 8** is a schematic diagram of a computer system **800** for implementing examples disclosed herein. The computer system **800** is adapted to execute instructions from a computer-readable medium to perform these and/or any of the functions or processing described herein. The computer system **800** may be connected (e.g., networked) to other machines in a LAN, an intranet, an extranet, or the Internet. While only a single device is illustrated, the computer system **800** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **800** may comprise at least one computing device or electronic device capable of including firmware, hardware, and/or executing software instructions to implement the functionality described herein. The computer system **800** may include processing circuitry **802** (e.g., processing circuitry including one or more processor devices or control units), a memory **804,** and a system bus **806.** The computer system **800** may include at least one computing device having the processing circuitry **802.** The system bus **806** provides an interface for system components including, but not limited to, the memory **804** and the processing circuitry **802.** The processing circuitry **802** may include any number of hardware components for conducting data or signal processing or for executing computer code stored in memory **804.** The processing circuitry **802** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **802** may further include computer executable code that controls operation of the programmable device.

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilised with the systems and methods of this description. The memory **804** may be communicably connected to the processing circuitry **802** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., random-access memory (RAM)), or any other medium which can be used to carry or store desired program code in the form of machine-executable instructions or data structures and which can be accessed by a computer or other machine with processing circuitry **802.** A basic input/output system (BIOS) **812** may be stored in the non-volatile memory **808** and can include the basic routines that help to transfer information between elements within the computer system **800.**

The computer system **800** may further include or be coupled to a non-transitory computer-readable storage medium such as the storage device **814,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like.

Computer-code that is hard or soft coded may be provided in the form of one or more modules. The module(s) can be implemented as software and/or hard-coded in circuitry to implement the functionality described herein in whole or in part. The modules may be stored in the storage device **814** and/or in the volatile memory **810,** which may include an operating system **816** and/or one or more program modules **818.** All or a portion of the examples disclosed herein may be implemented as a computer program **820** stored on a transitory or non-transitory computer-usable or computer-readable storage medium (e.g., single medium or multiple media), such as the storage device **814,** which includes complex programming instructions (e.g., complex computer-readable program code) to cause the processing circuitry **802** to carry out actions described herein. Thus, the computer-readable program code of the computer program **820** can comprise software instructions for implementing the functionality of the examples described herein when executed by the processing circuitry**802**. In some examples, the storage device **814** may be a computer program product (e.g., readable storage medium) storing the computer program **820** thereon, where at least a portion of a computer program **820** may be loadable (e.g., into a processor) for implementing the functionality of the examples described herein when executed by the processing circuitry**802**. The processing circuitry **802** may serve as a controller or control system for the computer system **800** that is to implement the functionality described herein.

The computer system **800** may include an input device interface **822** configured to receive input and selections to be communicated to the computer system **800** when executing instructions, such as from a keyboard, mouse, touch-sensitive surface, etc. Such input devices may be connected to the processing circuitry **802** through the input device interface **822** coupled to the system bus **806** but can be connected through other interfaces, such as a parallel port, an Institute of Electrical and Electronic Engineers (IEEE) 1394 serial port, a Universal Serial Bus (USB) port, an IR interface, and the like. The computer system **800** may include an output device interface **824** configured to forward output, such as to a display, a video display unit (e.g., a liquid crystal display (LCD) or a cathode ray tube (CRT)). The computer system **800** may include a communications interface **826** suitable for communicating with a network as appropriate or desired.

According to the disclosed technology, vehicle trajectories within a site are modelled and assessed to see if they will lead to a traffic deadlock at the site. The classification of each of the vehicle trajectories is made offline in a computer model of the site of interest and the output of the classifier is made available to the traffic planner when a candidate vehicle trajectory is being assessed by the traffic planner. However, in some embodiments, the traffic planner may also respond dynamically to traffic situations as they occur on the site of interest, and it is possible in some embodiments to use the traffic planner to adjust vehicle trajectories in real-time by drawing on a set of guided vehicle trajectories that have been generated in advance and classified for that site as leading to a potential deadlock or not. This may allow dynamic adjustment of guided trajectories for one or more vehicles at a site in some embodiments.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer-implemented traffic planner according to the second aspect, wherein the vehicles are autonomous or manually operated heavy-duty vehicles following predetermined planned vehicle trajectories in the site.

Example 2: A computer-implemented traffic planner according to the second aspect, wherein the site being a construction site, a mine, a harbour, a warehouse, an airport or a mass transit station.

## Claims

1. A computer-implemented method (600) of assessing vehicle trajectories for deadlock scenarios in a site (1; 1a) where multiple vehicles (100a, 100b, 100c) operate by following planned vehicle trajectories, wherein the site (1; 1a) includes at least one traffic-constrained area (SL), where only one vehicle (100a, 100b, 100c) may drive through at a time, via which at least two of the multiple vehicles (100a, 100b, 100c) need to pass when following their planned trajectories, the method comprising:
- generating (602) a starting vehicle state for each of the multiple vehicles (100a, 100b, 100c), the starting vehicle state of each vehicle (100a, 100b, 100c) corresponding to placing each vehicle (100a, 100b, 100c) at a start position on its planned trajectory, wherein each vehicle's planned trajectory in the site (1; 1a) is represented using a connected directed graph of the site (1; 1a), and wherein the starting vehicle state is represented by a starting node (A, B1, C1, D1, E, F, D2, C2, B2, G) of the connected directed graph,
- iteratively updating (604) the states of the multiple vehicles (100a, 100b, 100c) operating in the site (1; 1a) from each vehicle's start position as the vehicles (100a, 100b, 100c) follow their planned trajectory, wherein with each iteration, for each vehicle: each vehicle's state is updated to a new vehicle state which indicates either:
- the vehicle (100a, 100b, 100c) occupying another a further node (A, B1, C1, D1, E, F, D2, C2, B2, G) along the connected directed graph to the node (A, B1, C1, D1, E, F, D2, C2, B2, G) occupied by the vehicle (100a, 100b, 100c) in the previous iteration,
- the vehicle (100a, 100b, 100c) occupying the node (A, B1, C1, D1, E, F, D2, C2, B2, G) of the previous iteration; and
- classifying (606), if the new vehicle state represents a current vehicle deadlock at the site (1; 1a), the new vehicle state as an explicit deadlock state, wherein the explicit deadlock state fulfils the condition that a set of vehicles (100a, 100b, 100c) block each other from moving along their planned trajectories,
- storing (608) the new vehicle state as an explicit deadlock state in a first classification memory (M_1),
- classifying (606), if the new vehicle state represents a future vehicle deadlock at the site (1; 1a), the vehicle state as an implicit deadlock state; and
- storing (612) the new vehicle state as an implicit deadlock state in a second classification memory (M_2),
- modifying the locations on the site (1; 1a) until the planned vehicle trajectories do not lead to a deadlock.

2. A computer-implemented method (600) according to claim 1, wherein iteratively updating the states of the multiple vehicles (100a, 100b, 100c) comprises:
- selecting the other node positions (A, B1, C1, D1, E, F, D2, C2, B2, G) for the multiple vehicles (100a, 100b, 100c) randomly or pseudo-randomly with each iteration.

3. A computer-implemented method (600) according to claim 1, wherein iteratively updating the states of the multiple vehicles (100a, 100b, 100c) comprises:
- selecting the other node positions (A, B1, C1, D1, E, F, D2, C2, B2, G) for the multiple vehicles (100a, 100b, 100c) to maximise their moved distance with each iteration.

4. A computer-implemented method (600) according to any one of claims 1-3, wherein the vehicles (100a, 100b, 100c) are autonomous vehicles (100a, 100b, 100c) following planned trajectories.

5. A computer-implemented method (600) according to any one of claims 1-3, wherein the vehicles (100a, 100b, 100c) are manually operated vehicles (100a, 100b, 100c) following planned trajectories.

6. A computer-implemented method (600) according to any one of the preceding claims, wherein the traffic-constrained area (SL) is a single traffic lane.

7. A computer-implemented method (600) according to any one of the preceding claims, wherein the method comprises:
- identifying the nodes (A, B1, C1, D1, E, F, D2, C2, B2, G) along the vehicle trajectories, where the vehicles (100a, 100b, 100c) have the greatest likelihood of encountering traffic deadlock situations.

8. A computer-implemented method (600) according to any one of the preceding claims, wherein the method comprises:
- Minimising the likelihood of deadlocks by adjusting one or more or all of: the number of vehicles (100a, 100b, 100c); their vehicle trajectories; and one or more traffic constraint rules along the vehicle trajectories.

9. A computer-implemented traffic planner (700) for planning a plurality of planned vehicle trajectories for vehicles (100a, 100b, 100c) within a site (1; 1a) having at least one traffic-constrained location (SL), the traffic planner (700) comprising:
- a deadlock classifier model configured to classify a traffic situation for vehicle traffic following planned vehicle trajectories within the site (1; 1a), wherein the deadlock classifier comprises first classification memory (M_1) and a second classification memory (M_2),
- wherein the traffic planner (700) is configured, based on classifications generated by the method according to the preceding claims, to populate the first classification memory (M_1) with explicit deadlock states and the second classification memory (M_2) with implicit deadlock states until all explicit and implicit deadlock states are found,
- wherein the traffic planner (700) is configured, based on the stored explicit and implicit deadlock states in the first classification memory (M_1) and the second classification memory (M_2), to plan an action to perform along each planned vehicle trajectory in the site (1; 1a).

10. A computer-implemented traffic planner (700) according to claim 9, wherein the traffic planner (700) is configured, based on the stored explicit and implicit deadlock states in the first and second classification memories (M_1, M_2), to determine if a planned design of a site (1; 1a) where multiple vehicles (100a, 100b, 100c) will operate by following planned vehicle trajectories will cause implicit and/or explicit deadlocks.

11. A computer-implemented traffic planner (700) of any one of claims 9 or 10, wherein the traffic-constrained location (SL) within the site (1; 1a) through which the plurality of planned vehicle trajectories pass, comprises a one-way section along which at least two vehicle trajectories pass in different directions.

12. A computer program product comprising program code for performing, when executed by the processing circuitry, the method of any of claims 1-8.

13. A non-transitory computer-readable storage medium comprising instructions, which when executed by the processing circuitry, cause the processing circuitry to perform the method of any of claims 1-8.

## Patentansprüche

1. Computerimplementiertes Verfahren (600) zum Bewerten von Fahrzeugrouten für Stau-Szenarien an einem Standort (1; 1a), an dem mehrere Fahrzeuge (100a, 100b, 100c) verkehren, indem sie geplanten Fahrzeugrouten folgen, wobei der Standort (1; 1a) mindestens einen verkehrsverengten Bereich (SL) beinhaltet, durch den zur gleichen Zeit nur ein Fahrzeug (100a, 100b, 100c) hindurchfahren kann und den mindestens zwei der mehreren Fahrzeuge (100a, 100b, 100c) passieren müssen, wenn sie ihren geplanten Routen folgen, wobei das Verfahren Folgendes umfasst:
- Erzeugen (602) eines Start-Fahrzeugzustands für jedes der mehreren Fahrzeuge (100a, 100b, 100c), wobei der Start-Fahrzeugzustand jedes Fahrzeugs (100a, 100b, 100c) dem Platzieren jedes Fahrzeugs (100a, 100b, 100c) an einer Startposition auf seiner geplanten Route entspricht, wobei die geplante Route jedes Fahrzeugs an dem Standort (1; 1a) unter Verwendung eines verbundenen gerichteten Graphen des Standorts (1; 1a) dargestellt wird und wobei der Start-Fahrzeugzustand durch einen Startknoten (A, B1, C1, D1, E, F, D2, C2, B2, G) des verbundenen gerichteten Graphen dargestellt wird,
- iteratives Aktualisieren (604) der Zustände der mehreren Fahrzeuge (100a, 100b, 100c), die an dem Standort (1; 1a) verkehren, ausgehend von der Startposition jedes Fahrzeugs, während die Fahrzeuge (100a, 100b, 100c) ihrer geplanten Route folgen, wobei bei jeder Iteration für jedes Fahrzeug Folgendes erfolgt: der Zustand jedes Fahrzeugs wird auf einen neuen Fahrzeugzustand aktualisiert, der eines der Folgenden angibt:
- das Fahrzeug (100a, 100b, 100c) belegt einen weiteren Knoten (A, B1, C1, D1, E, F, D2, C2, B2, G) entlang des verbundenen gerichteten Graphen zu dem Knoten (A, B1, C1, D1, E, F, D2, C2, B2, G), der durch das Fahrzeug (100a, 100b, 100c) in der vorherigen Iteration belegt ist,
- das Fahrzeug (100a, 100b, 100c) belegt den Knoten (A, B1, C1, D1, E, F, D2, C2, B2, G) der vorherigen Iteration; und
- Klassifizieren (606), wenn der neue Fahrzeugzustand einen aktuellen Fahrzeugstau an dem Standort (1; 1a) darstellt, des neuen Fahrzeugzustands als einen expliziten Stauzustand, wobei der explizite Stauzustand die Bedingung erfüllt, dass ein Satz von Fahrzeugen (100a, 100b, 100c) sich gegenseitig daran hindert, sich entlang ihrer geplanten Routen zu bewegen,
- Speichern (608) des neuen Fahrzeugzustands als einen expliziten Stauzustand in einem ersten Klassifizierungsspeicher (M_1),
- Klassifizieren (606), wenn der neue Fahrzeugzustand einen künftigen Fahrzeugstau an dem Standort (1; 1a) darstellt, des Fahrzeugzustands als einen impliziten Stauzustand; und
- Speichern (612) des neuen Fahrzeugzustands als einen impliziten Stauzustand in einem zweiten Klassifizierungsspeicher (M_2),
- Verändern der örtlichen Gegebenheiten an dem Standort (1; 1a), bis die geplanten Fahrzeugrouten nicht mehr zu einem Stau führen.

2. Computerimplementiertes Verfahren (600) nach Anspruch 1, wobei das iterative Aktualisieren der Zustände der mehreren Fahrzeuge (100a, 100b, 100c) Folgendes umfasst:
- Auswählen der anderen Knotenpositionen (A, B1, C1, D1, E, F, D2, C2, B2, G) für die mehreren Fahrzeuge (100a, 100b, 100c) nach dem Zufallsprinzip oder Pseudozufallsprinzip bei jeder Iteration.

3. Computerimplementiertes Verfahren (600) nach Anspruch 1, wobei das iterative Aktualisieren der Zustände der mehreren Fahrzeuge (100a, 100b, 100c) Folgendes umfasst:
- Auswählen der anderen Knotenpositionen (A, B1, C1, D1, E, F, D2, C2, B2, G) für die mehreren Fahrzeuge (100a, 100b, 100c), um ihre zurückgelegte Distanz bei jeder Iteration zu maximieren.

4. Computerimplementiertes Verfahren (600) nach einem der Ansprüche 1-3, wobei die Fahrzeuge (100a, 100b, 100c) autonome Fahrzeuge (100a, 100b, 100c) sind, die geplanten Routen folgen.

5. Computerimplementiertes Verfahren (600) nach einem der Ansprüche 1-3, wobei die Fahrzeuge (100a, 100b, 100c) manuell gesteuerte Fahrzeuge (100a, 100b, 100c) sind, die geplanten Routen folgen.

6. Computerimplementiertes Verfahren (600) nach einem der vorhergehenden Ansprüche, wobei der verkehrsverengte Bereich (SL) eine einzelne Fahrzeugspur ist.

7. Computerimplementiertes Verfahren (600) nach einem der vorhergehenden Ansprüche, wobei das Verfahren Folgendes umfasst:
- Identifizieren der Knoten (A, B1, C1, D1, E, F, D2, C2, B2, G) entlang der Fahrzeugrouten, auf denen die Fahrzeuge (100a, 100b, 100c) mit der größten Wahrscheinlichkeit in Verkehrsstausituationen geraten.

8. Computerimplementiertes Verfahren (600) nach einem der vorhergehenden Ansprüche, wobei das Verfahren Folgendes umfasst:
- Minimieren der Wahrscheinlichkeit von Staus durch Anpassen eines oder mehrerer oder aller der Folgenden: der Anzahl von Fahrzeugen (100a, 100b, 100c); deren Fahrzeugrouten; und einer oder mehrerer Verkehrsverengungsregeln entlang der Fahrzeugrouten.

9. Computerimplementierter Verkehrsplaner (700) zum Planen einer Vielzahl von geplanten Fahrzeugrouten für Fahrzeuge (100a, 100b, 100c) innerhalb eines Standorts (1; 1a), der mindestens einen verkehrsverengten Bereich (SL) aufweist, wobei der Verkehrsplaner (700) Folgendes umfasst:
- ein Stauklassifikatormodell, das dazu konfiguriert ist, eine Verkehrssituation für Fahrzeugverkehr zu klassifizieren, der geplanten Fahrzeugrouten innerhalb des Standorts (1; 1a) folgt, wobei der Stauklassifikator einen ersten Klassifizierungsspeicher (M_1) und einen zweiten Klassifizierungsspeicher (M_2) umfasst,
- wobei der Verkehrsplaner (700) dazu konfiguriert ist, basierend auf Klassifizierungen, die durch das Verfahren nach den vorhergehenden Ansprüchen erzeugt werden, den ersten Klassifizierungsspeicher (M_1) mit expliziten Stauzuständen und den zweiten Klassifizierungsspeicher (M_2) mit impliziten Stauzuständen zu füllen, bis alle expliziten und impliziten Stauzustände gefunden wurden,
- wobei der Verkehrsplaner (700) dazu konfiguriert ist, basierend auf den gespeicherten expliziten und impliziten Stauzuständen in dem ersten Klassifizierungsspeicher (M_1) und in dem zweiten Klassifizierungsspeicher (M_2) eine Maßnahme zu planen, die entlang jeder geplanten Fahrzeugroute an dem Standort (1; 1a) durchzuführen ist.

10. Computerimplementierter Verkehrsplaner (700) nach Anspruch 9, wobei der Verkehrsplaner (700) dazu konfiguriert ist, basierend auf den gespeicherten expliziten und impliziten Stauzuständen in dem ersten und dem zweiten Klassifizierungsspeicher (M_1, M_2) zu bestimmen, ob eine geplante Gestaltung eines Standorts (1; 1a), an dem mehrere Fahrzeuge (100a, 100b, 100c) durch Folgen geplanter Fahrzeugrouten verkehren, implizite und/oder explizite Staus verursachen wird.

11. Computerimplementierter Verkehrsplaner (700) nach einem der Ansprüche 9 oder 10, wobei der verkehrsverengte Bereich (SL) innerhalb des Standorts (1; 1a), durch den die Vielzahl von geplanten Fahrzeugrouten verläuft, einen Einbahnstraßenabschnitt umfasst, entlang dem mindestens zwei Fahrzeugrouten in unterschiedliche Richtungen verlaufen.

12. Computerprogrammprodukt, umfassend Programmcode, um, wenn dieser durch die Verarbeitungsschaltung ausgeführt wird, das Verfahren nach einem der Ansprüche 1-8 durchzuführen.

13. Nichtflüchtiges, computerlesbares Speichermedium, umfassend Anweisungen, die, wenn sie durch die Verarbeitungsschaltung ausgeführt werden, die Verarbeitungsschaltung dazu veranlassen, das Verfahren nach einem der Ansprüche 1-8 durchzuführen.

## Revendications

1. Procédé mis en œuvre par ordinateur (600) pour évaluer les trajectoires de véhicules en cas de blocage sur un site (1 ; 1a) où plusieurs véhicules (100a, 100b, 100c) circulent en suivant des trajectoires planifiées, dans lequel le site (1 ; 1a) comprend au moins une zone de circulation restreinte (SL) où un seul véhicule (100a, 100b, 100c) peut circuler à la fois, et par laquelle au moins deux des multiples véhicules (100a, 100b, 100c) doivent passer lorsqu'ils suivent leurs trajectoires planifiées, le procédé comprenant :
- la génération (602) d'un état de véhicule de départ pour chacun des multiples véhicules (100a, 100b, 100c), l'état de véhicule de départ de chaque véhicule (100a, 100b, 100c) correspondant au placement de chaque véhicule (100a, 100b, 100c) à une position de départ sur sa trajectoire prévue,
dans lequel la trajectoire prévue de chaque véhicule dans le site (1 ; 1a) est représentée à l'aide d'un graphe orienté connexe du site (1 ; 1a), et dans lequel l'état de départ du véhicule est représenté par un nœud de départ (A, B1, C1, D1, E, F, D2, C2, B2, G) du graphe orienté connexe,
- la mise à jour itérative (604) des états des multiples véhicules (100a, 100b, 100c) opérant sur le site (1 ; 1a) à partir de la position de départ de chaque véhicule à mesure que les véhicules (100a, 100b, 100c) suivent leur trajectoire prévue, dans lequel à chaque itération, pour chaque véhicule : l'état de chaque véhicule est mis à jour vers un nouvel état de véhicule qui indique soit :
- le véhicule (100a, 100b, 100c) occupant un autre nœud (A, B1, C1, D1, E, F, D2, C2, B2, G) le long du graphe orienté connexe au nœud (A, B1, C1, D1, E, F, D2, C2, B2, G) occupé par le véhicule (100a, 100b, 100c) dans l'itération précédente,
- le véhicule (100a, 100b, 100c) occupant le nœud (A, B1, C1, D1, E, F, D2, C2, B2, G) de l'itération précédente ; et
- la classification (606), si le nouvel état du véhicule représente un blocage actuel du véhicule sur le site (1 ; 1a), du nouvel état du véhicule comme un état de blocage explicite, dans lequel l'état de blocage explicite remplit la condition selon laquelle un ensemble de véhicules (100a, 100b, 100c) se bloquent mutuellement en se déplaçant le long de leurs trajectoires prévues,
- la mémorisation (608) du nouvel état du véhicule sous forme d'état de blocage explicite dans une première mémoire de classification (M_1),
- la classification (606), si le nouvel état du véhicule représente un futur blocage du véhicule sur le site (1 ; 1a), de l'état du véhicule comme un état de blocage implicite ; et
- la mémorisation (612) du nouvel état du véhicule comme état de blocage implicite dans une seconde mémoire de classification (M_2),
- la modification des emplacements sur le site (1 ; 1a) jusqu'à ce que les trajectoires prévues des véhicules ne conduisent pas à un blocage.

2. Procédé mis en œuvre par ordinateur (600) selon la revendication 1, dans lequel la mise à jour itérative des états des multiples véhicules (100a, 100b, 100c) comprend :
- la sélectionner des autres positions de nœuds (A, B1, C1, D1, E, F, D2, C2, B2, G) pour les multiples véhicules (100a, 100b, 100c) de manière aléatoire ou pseudo-aléatoire à chaque itération.

3. Procédé mis en œuvre par ordinateur (600) selon la revendication 1, dans lequel la mise à jour itérative des états des multiples véhicules (100a, 100b, 100c) comprend :
- la sélection des autres positions de nœuds (A, B1, C1, D1, E, F, D2, C2, B2, G) pour les multiples véhicules (100a, 100b, 100c) afin de maximiser leur distance de déplacement à chaque itération.

4. Procédé mis en œuvre par ordinateur (600) selon l'une quelconque des revendications 1 à 3, dans lequel les véhicules (100a, 100b, 100c) sont des véhicules autonomes (100a, 100b, 100c) suivant des trajectoires planifiées.

5. Procédé mis en œuvre par ordinateur (600) selon l'une quelconque des revendications 1 à 3, dans lequel les véhicules (100a, 100b, 100c) sont des véhicules à commande manuelle (100a, 100b, 100c) suivant des trajectoires planifiées.

6. Procédé mis en œuvre par ordinateur (600) selon l'une quelconque des revendications précédentes, dans lequel la zone à circulation restreinte (SL) est une voie de circulation unique.

7. Procédé mis en œuvre par ordinateur (600) selon l'une quelconque des revendications précédentes, dans lequel le procédé comprend :
- l'identification des nœuds (A, B1, C1, D1, E, F, D2, C2, B2, G) le long des trajectoires des véhicules, où les véhicules (100a, 100b, 100c) ont la plus grande probabilité de rencontrer des situations de blocage de la circulation.

8. Procédé mis en œuvre par ordinateur (600) selon l'une quelconque des revendications précédentes, dans lequel le procédé comprend :
- la minimisation de la probabilité de blocages en ajustant un ou plusieurs ou tous les éléments suivants : le nombre de véhicules (100a, 100b, 100c) ; les trajectoires des véhicules ; et une ou plusieurs règles de contrainte de circulation le long des trajectoires des véhicules.

9. Planificateur de trafic informatisé (700) permettant de planifier une pluralité de trajectoires de véhicules (100a, 100b, 100c) sur un site (1 ; 1a) comportant au moins un emplacement à circulation restreinte (SL), le planificateur de trafic (700) comprenant :
- un modèle de classificateur de blocage configuré pour classifier une situation de trafic pour le trafic de véhicules suivant des trajectoires de véhicules planifiées dans le site (1 ; 1a), dans lequel le classificateur de blocage comprend une première mémoire de classification (M_1) et une seconde mémoire de classification (M_2),
- dans lequel le planificateur de trafic (700) est configuré, sur la base des classifications générées par le procédé selon les revendications précédentes, pour remplir la première mémoire de classification (M_1) avec des états de blocage explicites et la seconde mémoire de classification (M_2) avec des états de blocage implicites jusqu'à ce que tous les états de blocage explicites et implicites soient trouvés,
- dans lequel le planificateur de trafic (700) est configuré, sur la base des états de blocage explicites et implicites stockés dans la première mémoire de classification (M_1) et la seconde mémoire de classification (M_2), pour planifier une action à effectuer le long de chaque trajectoire de véhicule planifiée dans le site (1 ; 1a).

10. Planificateur de trafic mis en œuvre par ordinateur (700) selon la revendication 9, dans lequel le planificateur de trafic (700) est configuré, sur la base des états de blocage explicites et implicites stockés dans les première et seconde mémoires de classification (M_1, M_2), pour déterminer si une conception planifiée d'un site (1 ; 1a) où de multiples véhicules (100a, 100b, 100c) fonctionneront en suivant des trajectoires de véhicule planifiées provoquera des blocages implicites et/ou explicites.

11. Planificateur de trafic mis en œuvre par ordinateur (700) selon l'une quelconque des revendications 9 ou 10, dans lequel l'emplacement à trafic limité (SL) dans le site (1 ; 1a) à travers lequel passe la pluralité de trajectoires de véhicule planifiées, comprend une section à sens unique le long de laquelle au moins deux trajectoires de véhicule passent dans des directions différentes.

12. Produit de programme informatique comprenant un code de programme pour mettre en œuvre, lorsqu'il est exécuté par le circuit de traitement, le procédé selon l'une quelconque des revendications 1 à **8.**

13. Support de stockage lisible par ordinateur non transitoire comprenant des instructions qui, lorsqu'elles sont exécutées par le circuit de traitement, amènent le circuit de traitement à mettre en œuvre le procédé selon l'une quelconque des revendications 1 à 8.
